Europäisches Patentamt

(19) European Patent Office

Office européen des brevets

(11) Publication number: **0 056 315**
**A1**

(12) **EUROPEAN PATENT APPLICATION**

(21) Application number: **82300096.3**

(22) Date of filing: **08.01.82**

(51) Int. Cl.³: **A 63 F 9/00, H 01 H 25/04**

(30) Priority: **08.01.81 US 223650**

(71) Applicant: **ATARI INC., 1265 Borregas Avenue, Sunnyvale, California 94086 (US)**

(43) Date of publication of application: **21.07.82 Bulletin 82/29**

(72) Inventor: **Asher, James Craig, 1079 Gruwell Place, San Jose California (US)**

(74) Representative: **Beresford, Keith Denis Louis et al, R.G.C. Jenkins & Co. Chancery House 53/64 Chancery Lane, London WC2A IQU (GB)**

(84) Designated Contracting States: **DE FR GB**

(54) Video game controller.

㊗ A player-operated control unit for a video game providing both a joystick control function and a paddle type control function. A combined joystick/paddle control assembly (25) has radially extending arms (69–72) each associated to a different joystick control switch (34–37) mounted on a substrate (27) in a housing (28, 29). The assembly also includes a rotatable potentiometer having a shaft extending through the top of the housing on which a control knob (86) is mounted. The assembly (25) is pivotally mounted on a support post (88) located on the inside bottom surface of the housing, and rotational motion of the assembly (25) is confined by the interlocking action of a pair of ribs (79) formed in the housing and slotted feet (76, 77) extending laterally of the bottom of the assembly.

A pair of game status switches (31, 33) and an fire/serve switch (32) are mounted on a substrate (27) and are operated respectively by a status switch operating assembly (22, 23) and a spring loaded fire/serve button (24).

1

# VIDEO GAME CONTROLLER

## BACKGROUND OF THE INVENTION

This invention relates generally to electronic video games, and specifically to player controlled units for such games.

Electronic video games are known in which the graphic symbols generated on a CRT screen are controlled by one or more players each operating a control unit. There are normally two different types of control units employed with such games: a joystick controller and a paddle controller. The former is employed primarily with combat type games and includes a manually operable joystick with associated switching elements affording bidirectional control of the displayed game symbols along two orthogonal axes, and a separate fire button and associated switching elements for affording a simulated missile firing capability. The latter control unit is normally used with simulated sporting games, such as tennis, basketball or the like and is provided with a rotatable knob and associated potentiometer elements for affording linear motion of the player's graphic symbol, and a separate serve button and associated switching elements for serving the ball (e.g. a tennis ball) or shooting the ball (e.g. a basketball).

In many electronic video games, particularly programmable games employing removable cartridges containing program instructions specifying one or more games to be played with the unit, two different sets of game control units have been supplied: a joystick controller and a paddle controller. In most game units of this type, a two-player capability is provided to add interest to the game, thus necessitating two pairs of game controllers: i.e. a pair of joystick controllers and a pair of paddle controllers. Due to the independent nature of the joystick type controller and the paddle type controller, this requirement for different pairs of controller types adds cost to the game unit, which is undesirable.

The undesirability of having two separate types of game controller units is further compounded by the fact that such units are typically subject to mechanical abuse, particularly when operated by children. Thus, in addition to being required to operate in a reliable manner, game controller units must also be rugged, durable and capable of withstanding the rigors of vigorous game play. Finally, such game controller units must also be capable of manufacture at minimum cost so that the entire video game unit is within the economic reach of the average consumer.

SUMMARY OF THE INVENTION

The invention comprises a durable, rugged, low cost game control unit for a video game which embodies the capabilities of both a joystick type controller and a paddle type controller in a single unit.

In the preferred embodiment, the invention comprises upper and lower mating housing members for encasing the controller operating elements, including a substrate on which a plurality of game status dome switches and joystick control dome switches are mounted. Two of the game status dome switches are operated by means of a corresponding plurality of projections depending downwardly from a deformable switch panel carried by the upper housing member. The remaining one of the game status dome switches functions as a fire/serve switch and is operated by means of a fire button having an inwardly extending tongue having a tip which is deflected downwardly upon actuation by means of a downwardly depending projection carried by the upper housing member.

The joystick control switches are operated by a joystick/paddle control assembly which includes a main body portion and a lower body portion, the assembly being received in a central aperture in the substrate and pivotally supported by an upstanding projection in the lower housing member. Frictional Motion of the assembly is confined by a pair of slotted feet each embracing a rib formed in the lower housing member. The assembly includes a potentiometer for providing paddle type control signals, the potentiometer including an upwardly extending rotatable shaft terminating above the top surface of the upper housing member and a manual control knob received in the shaft.

The main body portion includes four radially extending actuator arms each positioned over a different one of the joystick control switches so that pivotal motion of the assembly by a predetermined amount results in actuation of at least one switch. An annular rim formed in the inside lower surface of the upper housing member provides a restoring force to each actuator arm diagonally opposite an arm which is in the switch operation position.

In the wireless remote control embodiment, a flexible antenna is provided to reduce the possibility of injury to game players, particularly children. The antenna comprises an inner braided antenna cable having a round ball tip captured at the free end and a surrounding helical spring to provide sufficient stiffness to extend the antenna wire but sufficient flexibility to bend under pressure along the axis of the spring.

For a fuller understanding of the nature and advantages of the invention, reference should be had to the ensuing detailed description taken in conjunction with the accompanying drawings.

BRIEF DESCRIPTION OF THE DRAWINGS

Fig. 1 is a perspective view of a video game unit illustrating the principal components of the system;

Fig. 2 is a perspective view of a preferred embodiment of the combined controller;

Fig. 3 is an exploded perspective view illustrating the principal components of the preferred embodiment;

Fig. 4 is a sectional view illustrating the operation of game status switches;

Fig. 5 is an exploded perspective view of the joystick/paddle control assembly unit;

Fig. 6A is a sectional view illustrating the joystick portion of the invention in the neutral position;

Fig. 6B is a sectional view similar to Fig. 6A and showing the joystick portion in a switch operating position; and

Fig. 7 is a sectional view illustrating the construction of the controller unit antenna.

## DESCRIPTION OF THE PREFERRED EMBODIMENT

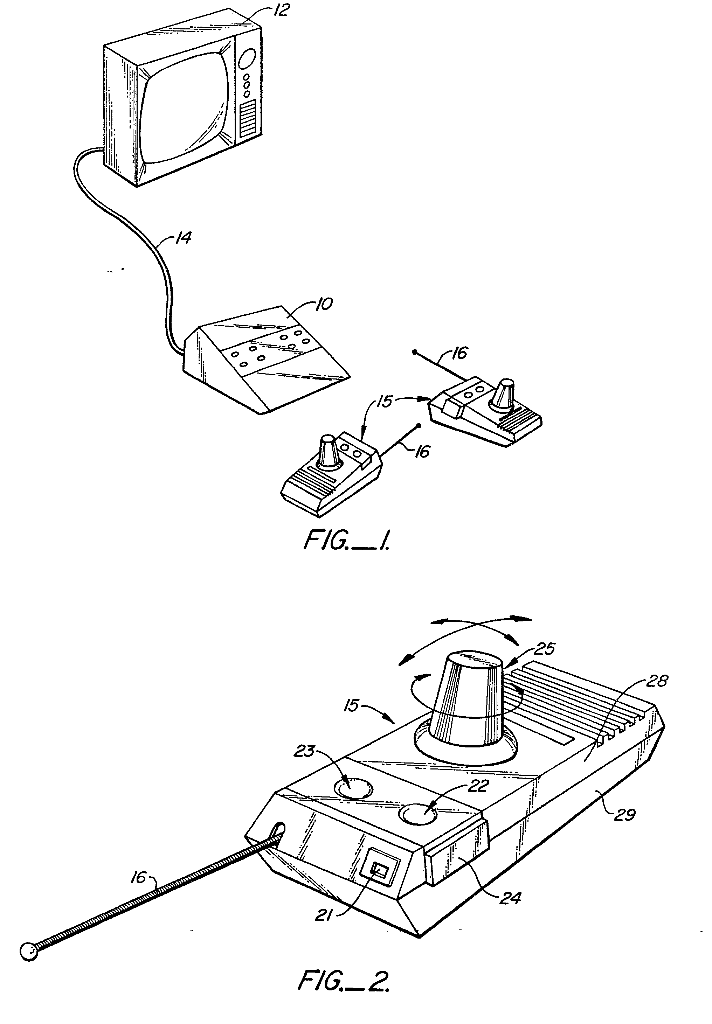

Turning now to the drawings, Fig. 1 illustrates a video game system with which the invention is designed to be used. As seen in this Fig., a video game console 10 having a program cartridge 11 inserted therein is coupled to a standard television receiver 12 by means of a suitable antenna wire coupling 14. Also seen in Fig. 1 are a pair of combination joystick and paddle control units 15 designed to be operated by the game players. In the preferred embodiment, each game controller unit 15 is designed for wireless remote control operation, and for this purpose each unit is provided with an antenna 16 described in detail below.

Fig. 2 illustrates in perspective view one of the game controller units 15. As seen in this Fig., the unit 15 is provided with an on-off slide switch 21, a game select switch operating element 22, a game reset switch operating element 23, a fire/serve switch button 24, and a combination joystick/paddle control element 25. As suggested by the arrows, control element 25 is both translatable to function as a joystick and rotatable to function as a paddle control.

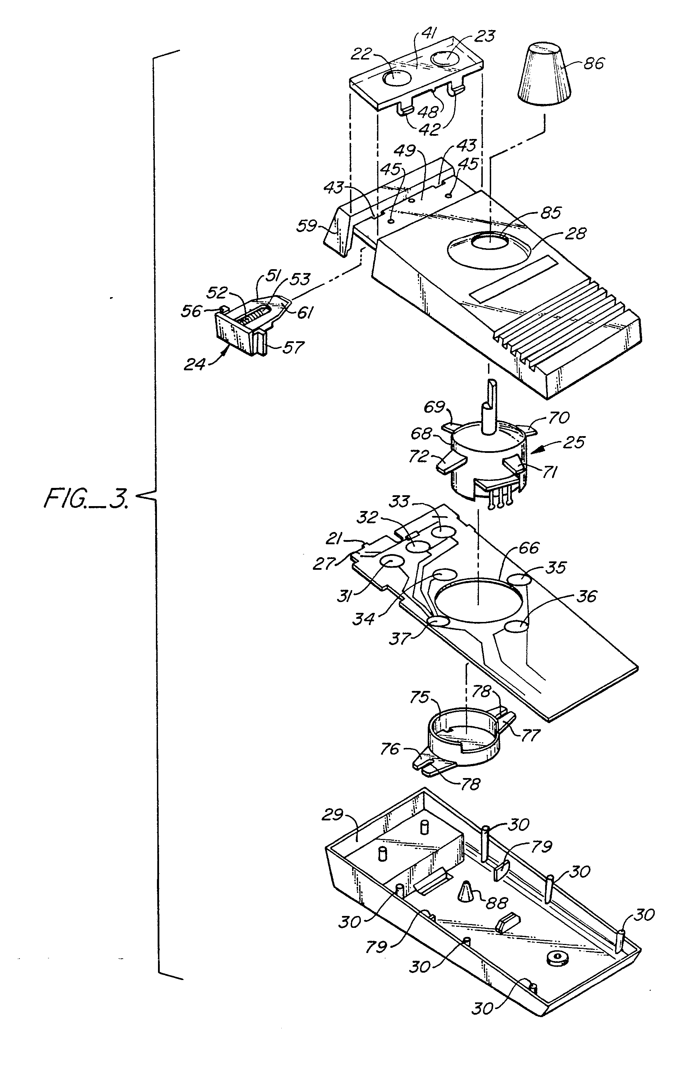

With reference to Fig. 3, slide switch 21 is mounted to the bottom side of a printed circuit substrate board 27 which is positioned within a housing composed of a top half casing section 28 and a bottom half casing section 29. The substrate 27 is physically supported by a plurality of upstanding posts 30 which mechanically contact the underside of substrate 27 in the peripheral region.

Mounted to the top of substrate 27 are seven dome
switches 31-37 of known construction, such as are commonly
found in hand-held calculator keyboards or other similar
keyboard units. In the preferred embodiment, dome switches
31 and 33 are game status switches used for selection of one
of a plurality of games incorporated into the system (game
select switch 31) and also used to reset the individual game
to a start condition (game reset switch 33). Since these
functions are somewhat related, switches 31 and 33 are
designed to be operated by juxtapositioned switch operating
elements generally designated with the reference numerals 22,
23.

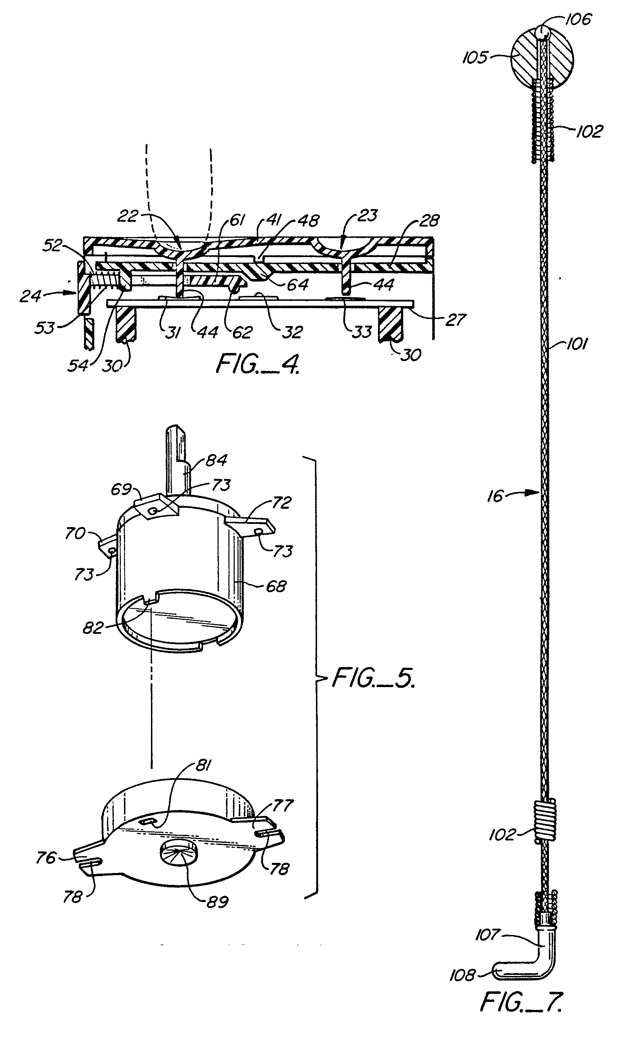

As best seen in Figs. 3 and 4, switch operating
elements 22, 23 are each formed in a unitary member 41 which
is snap fitted into a transverse recess in the top surface of
upper housing member 28 by means of lugs 42 and lug receiving
apertures 43. For conciseness, only the front lugs 42 and
the rear apertures 43 are illustrated in Fig. 3. It is
understood that a corresponding pair of lugs 42 depend downwardly from the rear edge of member 41, while a corresponding
pair of apertures 43 are formed in the near edge of the top
housing member 28 recess and are hidden from view in Fig. 3.
Each switch operating mechanism 22, 23 includes a concave
recess for receiving a fingertip of a game operator and a
downwardly depending projection 44 received in an aperture 45
in the top housing member 28 recess, the end of each projection 44 being centered over the corresponding switch 31, 33.

Member 41 is designed for flexing motion on either
side of the center line and, for this purpose, a pair of
downwardly depending projections 48 are provided on the front
and rear perimeter walls of member 41, each projection 48
resting in contact with the surface 49 of the top housing
member 28 channel. Member 41 is preferably fabricated of
molded plastic.

In operation, member 41 is normally positioned so
that neither projection 44 makes sufficient contact with its corresponding switch 31, 33 to depress the dome to the over center or actuated position. When it is desired to actuate a switch, such as switch 31, the game operator presses on the corresponding concave aperture and that portion of member 41 located adjacent the concave aperture deforms downwardly until the projection 44 depresses the corresponding switch (switch 31 in Fig. 4). Upon release of finger pressure, the projection 44 is raised to the neutral position by the restoring force of the deformed portion of member 41. It should be noted that projections 48 serve to isolate switch operation so that only one of the two switches 31, 33 can be actuated at once.

The remaining switch 32 of the three switches 31-33 functions alternately as a fire button and a serve button, depending on the identity of the game currently under play. As best seen in Figs. 3 and 4, the fire/serve button 24 comprises a unitary member 51 having an inwardly extending post 52 about which a light coil spring 53 is received. Spring 53 engages a limit stop 54 depending downwardly from the lower surface of top casing section 28, so that the fire/serve button 24 is normally biased outwardly by spring 53. A pair of end flanges 56, 57 engage the inner surface of side wall portion 59 of top casing section 28 to provide a limit stop in the outward direction for the fire/serve button 24. Extending laterally inwardly of button 24 is a central tongue portion 61 having a downwardly depending switch actuating projection 62 at the inner end thereof and a beveled surface 63 formed on the upper end surface thereof and dimensioned to engage an edge beveled projection 64 depending downwardly from the lower surface of top casing section 28. In operation, with button 24 in the unactuated position, spring 53 biases projection 62 away from the surface of switch 32. When button 24 is actuated by inward pressure applied by the operator, the beveled edge 63 engages the beveled side of the projection 64, thereby causing the end of tongue 61 to deflect downwardly so that projection 62 engages in mechanical contact with switch 32 to actuate same.

Upon release of inward pressure on button 24, spring 53 retracts the tongue to the normal, unactuated position.

The remaining dome switches 34-37 mounted on the top surface of substrate 27 provide the joystick control signals for up (switch 34), down (switch 36), right (switch 35), and left (switch 37), switches 34-37 being disposed about a central aperture 66 in substrate 27. Received within aperture 66 is the joystick/paddle control assembly unit generally designated with reference numeral 25. Unit 25 comprises a main body portion 68 having four radially extending flexible actuator arms 69-72 each having an actuating projection 73 depending downwardly from the lower surface and arranged to operate a corresponding switch 34-37. Unit 25 further includes a lower body portion 74 having a circular wall portion 75 dimensioned to receive the lower outer peripheral surface of main body portion 68. Circular wall portion 75 terminates in a base having a pair of oppositely extending foot portions 76, 77 each terminating in an open slot 78 dimensioned to receive an upstanding rib 79 formed in the lower casing portion 29. The base of lower body portion 74 is provided with a locking aperture 81 dimensioned to receive a lug portion 82 depending downwardly from the lower edge of main body portion 68. The combination of the aperture 81 and lug 82, and the slotted feet 76, 77 and ribs 79 provides a ready mechanical alignment for unit 25 and also prevents physical rotation of unit 25, once the controller unit 15 has been assembled.

Received within main body portion 68 of unit 25 is a standard potentiometer having an upwardly extending shaft 84 which extends through an aperture 85 in top housing cover 28. An operator knob 86 is press fitted onto shaft 84.

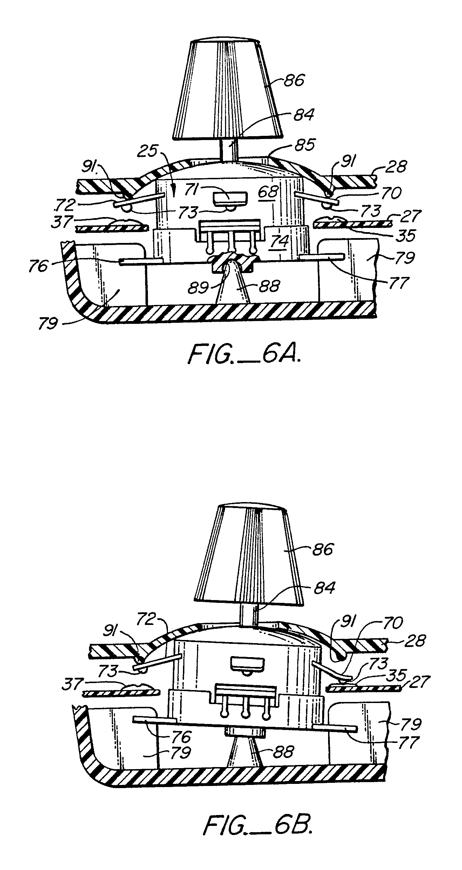

Unit 25 is supported at the bottom by means of a conical projection 88 which is received in a conical recess 89 formed in the bottom of lower body portion 74 to enable pivotal motion of the entire unit 25 in response to manipulation of knob 86. With reference to Fig. 6A, unit 25 is maintained in the neutral position illustrated by the spring-like action of arms 69-72 which bear against a downwardly projecting annular rim 91 formed on the lower surface of top housing cover 28. When operated in the joystick mode as illustrated in Fig. 6B, unit 25 pivots about conical projection 88 in the desired direction a sufficient distance to enable the proper actuating arm (in this case arm 70) to deflect the associated switch (switch 35) by means of projection 73. Correspondingly, the oppositely directed actuating arm (arm 72) engages in contact with annular rim 91 to deflect that arm in the opposite direction. It has been found that, over repeated cycles of arms 69-72, the opposite bending of the diagonally opposite actuator arm tends to compensate for the bending force experienced by the same arm when used to actuate the associated switch, so that the life of the assembly is prolonged.

It should be noted that the slots 78 in feet 76, 77 must be sufficiently large to enable unit 25 to be pivoted in the up and down directions (i.e. on a line drawn through the centers of switches 34, 36). It should also be noted that upper body portion 68 of unit 25 should be fabricated from a durable material providing sufficient stiffness to enable. actuation of the associated dome switches 34-37 while at the same time providing a spring-like return action to return unit 25 to the neutral position depicted in Fig. 6A. In the preferred embodiment of the invention, both upper body portion 68 and lower body portion 74 are fabricated from polypropylene polymer; other suitable material will occur to those skilled in the art.

In the remote control embodiment depicted in the Figs., antenna 16 has the construction shown in Fig. 7. As seen in this Fig., antenna 16 comprises a fine braided antenna cable 101 surrounded by a coil spring 102. At the free end of antenna 16, the braided cable 101 is received in a through-bore 103 formed in a small sphere 105. Ball 105 is retained on the end of braided cable 101 by means of an enlarged tip portion 106, which may comprise a small amount of solder adhered to the end of cable 103. An electrically conductive attachment elbow 107 is secured to the opposite end of antenna 16 by any suitable means, e.g. soldering, crimping or the like, the free end 108 being configured to be mechanically and electrically connected to substrate 27.

The antenna design of Fig. 7 is preferred for units to be operated by children, the ball 105 serving to reduce the probability of injury by eliminating a sharp pointed end, the flexible spring 102 functioning to permit the antenna 16 to bend under pressure while still providing sufficient rigidity for the antenna 16.

As will now be apparent, control units fabricated in accordance with the teachings of the invention afford the advantage of combined joystick/paddle type operation, are relatively inexpensive to manufacture and assemble, and are extremely durable and rugged in construction. While the above provides a full and complete disclosure of the preferred embodiments of the invention, various modifications, alternate constructions and equivalents may be employed without departing from the true spirit and scope of the invention. For example, while the invention has been described for a wireless remote video game application, if desired hard wired connections may be provided between the control unit 15 and the video game console 10. Therefore, the above description should not be construed as limiting the scope of the invention which is defined by the appended claims.

CLAIMS

1. A portable player-operated control unit comprising:

a housing having a top casing section (28) and a bottom casing section (29), said bottom casing section having substrate support means;

a substrate (27) supported by said substrate support means;

a first plurality of status switches (31,33) mounted on said substrate;

a second plurality of control switches (34 - 37) mounted on said substrate;

status switch actuator means (22, 23) positioned above said status switches for enabling selective actuation of said status switches in response to player control;

and characterised by

joystick/paddle control assembly means (25) for operating said control switches, said joystick/paddle control assembly means including a main body portion(68) having a plurality of outwardly extending flexible actuator arms (69 - 72) each positioned over a different one of said section plurality of switches and a lower body portion (75) pivotally supported by said bottom casing section, said lower body portion including means (76, 77) engaged with said bottom casing section for limiting motion of said assembly means, said assembly means further including potentiometer means carried by said main body portion and having an upwardly extending, rotatable shaft (84) terminating above the top surface of said top casing section and a control knob (86) received on said shaft for enabling manual operation of said unit.

2.   A control unit for an electronic game comprising:

means providing a set of status switches (31,33) and a set of control switches (34 - 37);

means (22,23) for selectively actuating the status switches; and

means (25) for operating the control switches;

characterised in that said operating means (25) comprises a mobile body (68) having a plurality of projections (69 - 72) each associated with a respective control switch, potentiometer means carried by
the body, and an actuator(86) for effecting
movement of the body.

FIG.__1.

FIG.__2.

0056315

0056315

FIG._3.

0056315

FIG.—4.

FIG.—5.

FIG.—7.

FIG.__6A.

FIG.__6B.

European Patent Office

**EUROPEAN SEARCH REPORT**

0056315

Application number

EP 82 30 0096.3

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| P,Y | EP - A1 - 0 024 813 (ATARI INC.) <br> * claims 1 to 4, 6 to 8, 10; fig. 2 * <br> -- | 1,2 | A 63 F 9/00 <br><br> H 01 H 25/04 |
| Y | FR - A1 - 2 365 199 (FAIRCHILD CAMERA AND INSTRUMENT CORP.) <br> * claims 1 to 3; page 2, lines 2 to 7; page 10, lines 1 to 7, 29 to 34; fig. 1 * <br> & DE - B2 - 2 739 593 <br> -- | 1,2 | |
| A | DE - B2 - 2 810 609 (ATARI INC.) <br> * claim 1; column 2, lines 42 to 46; column 4, lines 27 to 35; fig. 2 * <br> -- | 1,2 | **TECHNICAL FIELDS SEARCHED (Int.Cl. 3)** <br><br> A 63 F 9/00 <br><br> G 05 G 9/02 |
| A | FR - A1 - 2 395 765 (GRAND-CLEMENT) <br> * claim 1; page 7, lines 19 to 28 * <br> -- | 1,2 | H 01 H 25/00 |
| P,A | US - A - 4 297 542 (SHUMWAY) <br> * claim 1; column 7, lines 50 to 59; fig. 1 to 4 * <br> ---- | 1,2 | |

| | The present search report has been drawn up for all claims | | |
|---|---|---|---|
| Place of search <br> Berlin | Date of completion of the search <br> 29-03-1982 | Examiner <br> CLOT | |

EPO Form 1503.1 06.78